# EUROPEAN PATENT APPLICATION

(11) **EP 4 510 554 A1**
(43) Date of publication of application: **19.02.2025**
(21) Application number: 24156877.3
(22) Date of filing: 09.02.2024
(51) Int. Cl.: H04N 1/00, H04N 1/04, H04N 1/10

(54) **OPTICAL APPARATUS**

(30) Priority: 14.08.2023 JP 2023131855
(71) Applicant: FUJIFILM Business Innovation Corp., Minato-ku Tokyo (JP)
(72) Inventor: ASANO, Motohiro, Yokohama-shi, Kanagawa (JP); TAKAHASHI, Yosuke, Yokohama-shi, Kanagawa (JP); KIMIZUKA, Daiki, Yokohama-shi, Kanagawa (JP)
(74) Representative: Kurig, Thomas

(57) **Abstract**

An optical apparatus includes: a body part in which a close-contact optical system type reading section having an image sensor that reads light concentrated by a lens is disposed and in which a document platen glass and a first base contact member are disposed on an upper surface; and a covering part in which a second base contact member is disposed, which comes into contact with the first base contact member to perform base contact through a closing operation of a user and which separates from the first base contact member and releases the base contact through an opening operation of the user.

## Description

### BACKGROUND OF THE INVENTION

### (i) Field of the Invention

The present invention relates to an optical apparatus.

### (ii) Description of Related Art

There is a known technique of causing a close-contact optical type reading section to read a document. The reading section is configured to include a microlens array that concentrates light from a light source and a light receiving substrate that has an image sensor which reads the concentrated light (for example, JP2015-186132A). A reading apparatus having a close-contact optical type reading section is mostly used as a low-speed machine for home use in order to achieve reduction in weight by a configuration of the entire apparatus made of a resin. However, the reading apparatus can also be used as a business-oriented medium-speed machine or the like by increasing the driving frequency. However, since radiated noise becomes stronger as the driving frequency increases, the risk of electromagnetic interference increases. As a method of suppressing the radiated noise, for example, there is a method of surrounding a source of the radiated noise with a metal housing.

### SUMMARY OF THE INVENTION

In the reading apparatus having the close-contact optical type reading section, since a document platen made of glass is disposed on an upper surface thereof, it is difficult in design to surround the entire reading apparatus with a metal housing. Further, the weight is increased in a case where a metal housing is used. Thus, the advantage of the close-contact optical type that achieves reduction in weight by a configuration of the housing made of a resin cannot be utilized.

An object of the present invention is to achieve suppression of the radiated noise from the close-contact optical type reading section while achieving reduction in weight as compared with a case where the entire reading apparatus is surrounded by the metal housing.

According to a first aspect of the present disclosure, there is provided an optical apparatus including: a body part in which a close-contact optical system type reading section having an image sensor that reads light concentrated by a lens is disposed and in which a document platen glass and a first base contact member are disposed on an upper surface; and a covering part in which a second base contact member is disposed, which comes into contact with the first base contact member to perform base contact through a closing operation of a user and which separates from the first base contact member and releases the base contact through an opening operation of the user.

According to a second aspect of the present disclosure, there is provided the optical apparatus according to the first aspect of the present disclosure, in which combinations of the first base contact member and the second base contact member in a state of being in contact with each other by the closing operation may be respectively disposed near both end portions of the reading section.

According to a third aspect of the present disclosure, there is provided the optical apparatus according to the second aspect of the present disclosure, in which the combinations may be respectively disposed outside both end portions of the reading section.

According to a fourth aspect of the present disclosure, there is provided the optical apparatus according to the second or third aspect of the present disclosure, in which the combinations may be respectively disposed near edge portions of the document platen glass.

According to a fifth aspect of the present disclosure, there is provided the optical apparatus according to any one of the first to fourth aspects of the present disclosure, in which the first base contact member and the second base contact member each may be constituted of a metal member having a flat contact surface.

According to a sixth aspect of the present disclosure, there is provided the optical apparatus according to the fifth aspect of the present disclosure, in which at least one of the first base contact member or the second base contact member coming into contact with each other may be slidable due to a pressing force generated during contact.

According to a seventh aspect of the present disclosure, there is provided the optical apparatus according to any one of the first to sixth aspects of the present disclosure, in which the covering part may have an automatic document feeding function.

According to an eighth aspect of the present disclosure, there is provided the optical apparatus according to the seventh aspect of the present disclosure, in which the covering part may be able to automatically feed a document having a size larger than an A4 size.

In the first aspect of the present invention, in a case where the covering part is closed, the first base contact member and the second base contact member come into contact with each other to perform base contact. Thereby, radiated noise from the reading section is suppressed without surrounding the entire apparatus with the metal housing.

In the second aspect of the present invention, the combinations of the first base contact member and the second base contact member in a state of being in contact with each other by the closing operation are respectively disposed near both end portions of the reading section. Thereby, it is possible to suppress the radiated noise from the reading section.

In the third aspect of the present invention, the combinations of the first base contact member and the second base contact member are respectively disposed outside both end portions of the reading section. Thereby, the combinations of the first base contact member and the second base contact member surround the reading section. As a result, the radiated noise from the reading section can be efficiently suppressed as compared with a case where the combinations of the first base contact member and the second base contact member do not surround the reading section.

In the fourth aspect of the present invention, the combinations of the first base contact member and the second base contact member are respectively disposed near the edge portions of the document platen glass. Thereby, the combinations of the first base contact member and the second base contact member surround the reading section disposed inside the document platen glass. As a result, the radiated noise from the reading section can be efficiently suppressed as compared with a case where the combinations of the first base contact member and the second base contact member do not surround the reading section.

In the fifth aspect of the present invention, the first base contact member and the second base contact member are constituted of the metal member having the flat contact surface. Thereby, even in a case where the body of the user who performs the closing operation or the opening operation of the covering part touches the base contact member, it is possible to reduce the risk of injury or damage to the clothes.

In the sixth aspect of the present invention, at least one of the first base contact member or the second base contact member, which come into contact with each other, slides due to the pressing force generated during the contact. Thereby, the first base contact member and the second base contact member can be brought into close contact with each other. Therefore, it is possible to suppress contact failure.

In the seventh aspect of the present invention, the covering part has the automatic document feeding function. Therefore, a movable range of the reading section is restricted. Thereby, it is possible to restrict the number of base contact members to be disposed.

In the eighth aspect of the present invention, the covering part is able to automatically feed a document having a size larger than the A4 size. Thereby, by increasing the driving frequency, it is possible to suppress the radiated noise from the reading section that enables reading of a large document having a size larger than the A4 size.

### BRIEF DESCRIPTION OF THE DRAWINGS

Exemplary embodiment(s) of the present invention will be described in detail based on the following figures, wherein:
Fig. 1 is a perspective view showing an example of a schematic configuration of an image reading apparatus as an optical apparatus according to the present exemplary embodiment;
Fig. 2A is a front view showing an example of a schematic configuration of the image reading apparatus, and Fig. 2B is a side view showing an example of a schematic configuration of the image reading apparatus; and
Fig. 3A is a graph showing a magnitude of radiated noise of an image reading apparatus according to the related art in which a base contact member is not disposed, and Fig. 3B is a graph showing a magnitude of radiated noise of the image reading apparatus according to the present exemplary embodiment.

### DETAILED DESCRIPTION OF THE INVENTION

Hereinafter, exemplary embodiments of the present invention will be described in detail with reference to the accompanying drawings.

### <Image Reading Apparatus>

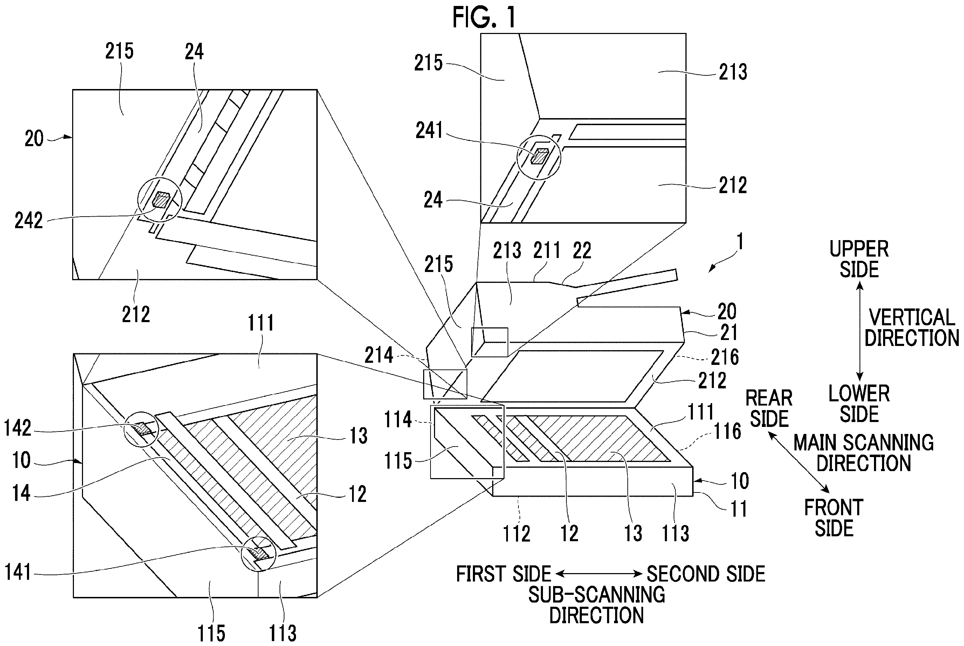

Fig. 1 is a perspective view showing an example of a schematic configuration of an image reading apparatus 1 as an optical apparatus according to the present exemplary embodiment.

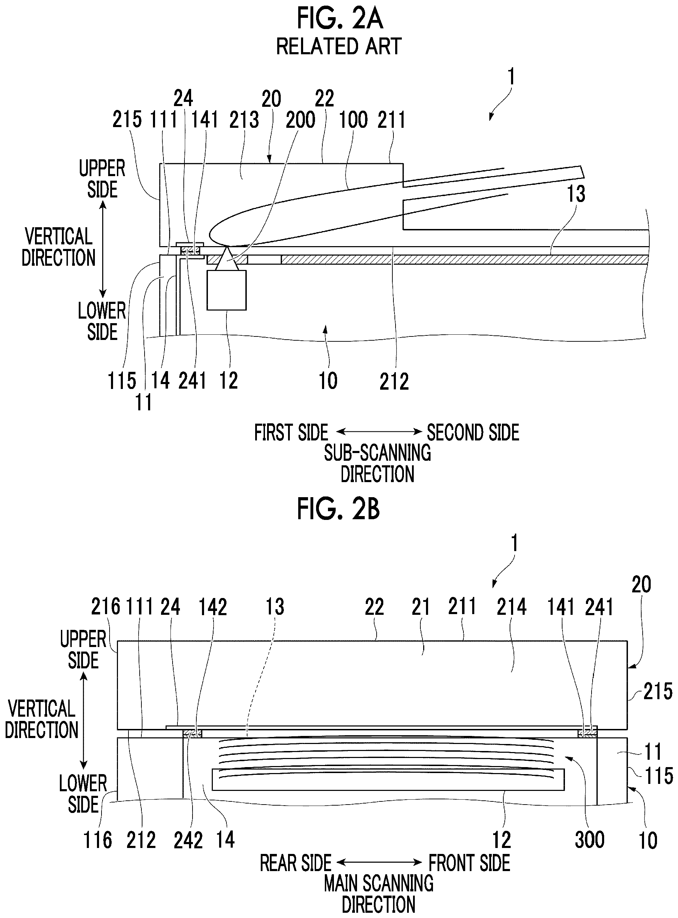

Fig. 2A is a front view showing an example of a schematic configuration of the image reading apparatus 1. Fig. 2B is a side view showing an example of a schematic configuration of the image reading apparatus 1.

The image reading apparatus 1 shown in Figs. 1 to 2B is an apparatus also called a scanner or a multifunction apparatus, and reads an image formed on a document 100. The image reading apparatus 1 is configured to include a body part 10 and a covering part 20.

### (Body Part)

The body part 10 is configured to include a housing 11, a contact image sensor (CIS) 12, and a document platen glass 13. The housing 11 has an upper surface 111 in the vertical direction, a lower surface 112 in the vertical direction, a front surface 113 in the main scanning direction, a rear surface 114 in the main scanning direction, a first surface 115 in the sub-scanning direction, and a second surface 116 in the sub-scanning direction. The housing 11 is a housing in which various apparatuses and members can be disposed. Most of the housing 11 is made of resin in order to achieve reduction in weight and cost.

The CIS 12 is a device disposed inside the housing 11 and reads an image formed on the document 100 sent to the document platen glass 13. The CIS 12 functions as a close-contact optical system type reading section having an image sensor (not shown in the drawing) that reads light concentrated by a lens (not shown in the drawing). The document platen glass 13 is a glass member disposed on a part of the surface 111 of the housing 11, and functions as a document platen that supports the document 100 to be read by the CIS 12.

The sizes of the CIS 12 and the document platen glass 13 are determined in accordance with the size of the readable document 100 and are not particularly limited. For example, a length of each of the CIS 12 and the document platen glass 13 in the main scanning direction may be set to about 300 millimeters (mm) such that the reading processing of the A3 size document 100 can be performed.

### (Base Contact Member of Body Part)

As shown in Figs. 1, 2A, and 2B, a plate-like metal member 14 is disposed near a first side end portion of the surface 111 of the housing 11 constituting the body part 10, in the sub-scanning direction. Each of the base contact members 141 and 142 as the first base contact member is disposed on each of the front side and the rear side of the metal member 14 in the main scanning direction. Respective specific positions of the base contact members 141 and 142 are outside of both end portions of the CIS 12 in the main scanning direction and near the edge portion of the document platen glass 13 (the first end portion in the sub-scanning direction in both end portions of the document platen glass 13 in the main scanning direction).

The base contact members 141 and 142 are metal members each having a substantially rectangular shape, and are each constituted of a metal gasket or the like. In a case where the covering part 20 is closed, the base contact members 141 and 142 respectively come into contact with the base contact members 241 and 242 of the covering part 20 to be described later. The upper surface of each of the base contact members 141 and 142 in the vertical direction is flat and is slightly higher than the metal member 14. Specifically, the upper surface of each of the base contact members 141 and 142 becomes higher than the metal member 14 toward the upper side in the vertical direction by about several millimeters (mm).

### (Covering Part)

The covering part 20 is disposed on the upper side of the body part 10 in the vertical direction, and covers the document platen glass 13 of the body part 10 through a closing operation of a user, and releases the covering of the document platen glass 13 through an opening operation of the user. The covering part 20 is configured to include a housing 21 and an automatic document feeder (ADF) 22. In addition, Fig. 1 shows a state in which the user has performed the opening operation on the covering part 20, and Figs. 2A and 2B show a state in which the user has performed the closing operation on the covering part 20.

That is, in the image reading apparatus 1, since the covering part 20 and the body part 10 are connected to each other via a hinge (not shown in the drawing) or the like, the user is able to perform the opening operation or the closing operation. Specifically, in a state where the closing operation is performed, a rear end portion in the main scanning direction in the lower surface 212 in the vertical direction in the covering part 20 and a rear end portion in the main scanning direction in the upper surface 111 in the vertical direction in the body part 10 are connected via a hinge or the like.

In a state where the housing 21 has been closed, the housing 21 has an upper surface 211 in the vertical direction, a lower surface 212 in the vertical direction, a front surface 213 in the main scanning direction, a rear surface 214 in the main scanning direction, a first surface 215 in the sub-scanning direction, and a second surface 216 in the sub-scanning direction. The housing 21 is a housing in which various apparatuses and members can be disposed. Most of the housing 21 is made of resin in order to achieve reduction in weight and cost. The ADF 22 is an automatic document feeder that feeds the document 100 to a reading position on the document platen glass 13 of the body part 10, and enables automatic feeding of the document 100 such as B5 size, B4 size, or A3 size.

### (Base Contact Member of Covering Part)

As shown in Figs. 1, 2A, and 2B, a plate-like metal member 24 is disposed near a first side end portion of the surface 212 of the housing 21 constituting the covering part 20, in the sub-scanning direction. Each of the base contact members 241 and 242 as the second base contact member is disposed on each of the front side and the rear side of the metal member 24 in the main scanning direction. Respective positions of the base contact members 241 and 242 in a state where the covering part 20 is closed are outside of both end portions of the CIS 12 of the body part 10 in the main scanning direction and near the edge portion of the document platen glass 13 (the first end portion in the sub-scanning direction in both end portions of the document platen glass 13 of the body part 10 in the main scanning direction).

The base contact members 241 and 242 are metal members each having a substantially rectangular shape, and are each constituted of a metal gasket or the like. The base contact members 241 and 242 respectively come into contact with the base contact members 141 and 142 of the body part 10 in a state where the covering part 20 is closed. The lower surface of each of the base contact members 241 and 242 in the vertical direction is flat and is slightly higher than the metal member 24. Specifically, the lower surface of each of the base contact members 241 and 242 is higher than the metal member 24 toward the lower side in the vertical direction by about several millimeters (mm).

### <Base Contact>

In a case where the reading processing of the document 100 which is set in the ADF 22 of the covering part 20 is started after the user closes the covering part 20, as shown in Figs. 2A and 2B, the CIS 12 reads an image, which is formed on the document 100, by irradiating the document 100 with light 200 and receiving the reflected light. In a case where the light 200 is emitted from the CIS 12 toward the document 100, the noise 300 is radiated from the CIS 12. However, the base contact is performed through combinations of the base contact member 141 and the base contact member 241 and the base contact member 142 and the base contact member 242 being in contact with each other. Thus, the radiation of the noise 300 is suppressed.

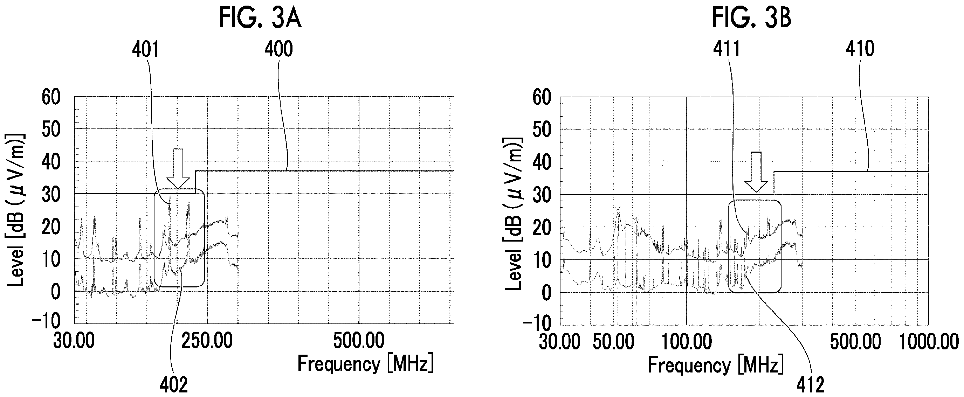

Fig. 3A is a graph showing a magnitude of the radiated noise of the image reading apparatus according to the related art in which the base contact member is not disposed. Fig. 3B is a graph showing a magnitude of the radiated noise of the image reading apparatus 1 according to the present exemplary embodiment.

A graph shown in Fig. 3A shows each of a maximum value 401 and an average value 402 of the radiated noise of the image reading apparatus according to the related art, in which the base contact member is not disposed, and a reference value 400 which is predetermined as the allowable magnitude of the radiated noise. As shown in Fig. 3A, in the image reading apparatus according to the related art, there is no margin between the reference value 400 and each of the maximum value 401 and the average value 402 of the radiated noise, and there is a location where the maximum value 401 of the radiated noise has reached the reference value 400.

A graph shown in Fig. 3B shows each of the maximum value 411 and the average value 412 of the radiated noise of the image reading apparatus 1 according to the present exemplary embodiment and a reference value 410 which is predetermined as the allowable magnitude of the radiated noise. As shown in Fig. 3B, in the image reading apparatus 1 according to the present exemplary embodiment, there is a margin between the reference value 410 and each of the maximum value 411 and the average value 412 of radiated noise. That is, the radiated noise from the CIS 12 is suppressed.

### <Other Exemplary Embodiment>

While the present exemplary embodiment has been described above, the present invention is not limited to the present exemplary embodiment. In addition, effects of the present invention are not limited to the effects disclosed in the present exemplary embodiment. For example, the configurations of the image reading apparatus 1 shown in Figs. 1, 2A, and 2B are merely exemplary examples for achieving the object of the present invention and are not particularly limited. It suffices that the above-mentioned function is provided in the image reading apparatus 1, and what kind of configuration is used to achieve the function is not limited to the examples shown in Figs. 1 to 2B. Further, the content of the graph showing the magnitude of the radiated noise shown in Fig. 3B is merely an example.

For example, in the examples shown in Figs. 1 to 2B described above, the heights of the base contact members disposed on each of the body part 10 and the covering part 20 of the image reading apparatus 1 in the vertical direction are all fixed, but the present invention is not limited thereto. For example, at least one of the base contact member disposed on the body part 10 or the base contact member disposed on the covering part 20 may be made slidable by a pressing force generated during contact, and the height in the vertical direction may be changed. In such a case, for example, a spring mechanism may be provided on at least one of the base contact member disposed on the body part 10 or the base contact member disposed on the covering part 20, and may be moved up and down during contact and separation.

Further, for example, the heights of the base contact members disposed on the body part 10 in the vertical direction may not be uniform. That is, the heights of the base contact members 141 and 142 in the vertical direction may be different from each other. In such a case, the heights of the base contact members 241 and 242 correspond to the heights of the base contact members 141 and 142 in the vertical direction.

Further, for example, in the examples shown in Figs. 1 and 2 mentioned above, two base contact members are disposed in each of the body part 10 and the covering part 20, but the present invention is not limited thereto. For example, three or more base contact members may be disposed on each of the body part 10 and the covering part 20.

### Supplementary Note

(((1))) An optical apparatus comprising:
   a body part in which a close-contact optical system type reading section having an image sensor that reads light concentrated by a lens is disposed and in which a document platen glass and a first base contact member are disposed on an upper surface; and
   a covering part in which a second base contact member is disposed, which comes into contact with the first base contact member to perform base contact through a closing operation of a user and which separates from the first base contact member and releases the base contact through an opening operation of the user.
(((2))) The optical apparatus according to (((1))),
   wherein combinations of the first base contact member and the second base contact member in a state of being in contact with each other by the closing operation are respectively disposed near both end portions of the reading section.
(((3))) The optical apparatus according to (((2))),
   wherein the combinations are respectively disposed outside both end portions of the reading section.
(((4))) The optical apparatus according to (((2))) or (((3))),
   wherein the combinations are respectively disposed near edge portions of the document platen glass.
(((5))) The optical apparatus according to any one of (((1))) to (((4))),
   wherein the first base contact member and the second base contact member each are constituted of a metal member having a flat contact surface.
(((6))) The optical apparatus according to (((5))),
   wherein at least one of the first base contact member or the second base contact member coming into contact with each other is slidable due to a pressing force generated during contact.
(((7))) The optical apparatus according to any one of (((1))) to (((6))),
   wherein the covering part has an automatic document feeding function.
(((8))) The optical apparatus according to (((7))),
   wherein the covering part is able to automatically feed a document having a size larger than an A4 size.

According to (((1))), in a case where the covering part is closed, the first base contact member and the second base contact member come into contact with each other to perform base contact. Thereby, radiated noise from the reading section is suppressed without surrounding the entire apparatus with the metal housing.

According to (((2))), the combinations of the first base contact member and the second base contact member in a state of being in contact with each other by the closing operation are respectively disposed near both end portions of the reading section. Thereby, it is possible to suppress the radiated noise from the reading section.

According to (((3))), the combinations of the first base contact member and the second base contact member are respectively disposed outside both end portions of the reading section. Thereby, the combinations of the first base contact member and the second base contact member surround the reading section. As a result, the radiated noise from the reading section can be efficiently suppressed as compared with a case where the combinations of the first base contact member and the second base contact member do not surround the reading section.

According to (((4))), the combinations of the first base contact member and the second base contact member are respectively disposed near the edge portions of the document platen glass. Thereby, the combinations of the first base contact member and the second base contact member surround the reading section disposed inside the document platen glass. As a result, the radiated noise from the reading section can be efficiently suppressed as compared with a case where the combinations of the first base contact member and the second base contact member do not surround the reading section.

According to (((5))), the first base contact member and the second base contact member are constituted of the metal member having the flat contact surface. Thereby, even in a case where the body of the user who performs the closing operation or the opening operation of the covering part touches the base contact member, it is possible to reduce the risk of injury or damage to the clothes.

According to (((6))), at least one of the first base contact member or the second base contact member, which come into contact with each other, slides due to the pressing force generated during the contact. Thereby, the first base contact member and the second base contact member can be brought into close contact with each other. Therefore, it is possible to suppress contact failure.

According to (((7))), the covering part has the automatic document feeding function. Therefore, a movable range of the reading section is restricted. Thereby, it is possible to restrict the number of base contact members to be disposed.

According to (((8))), the covering part is able to automatically feed a document having a size larger than the A4 size. Thereby, by increasing the driving frequency, it is possible to suppress the radiated noise from the reading section that enables reading of a large document having a size larger than the A4 size.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: image reading apparatus
10: body part
11: housing
12: CIS
13: document platen glass
14: metal member
20: covering part
21: housing
22: ADF
24: metal member
100: document
141, 142: base contact member
241, 242: base contact member
300: noise

## Claims

1. An optical apparatus comprising:
a body part in which a close-contact optical system type reading section having an image sensor that reads light concentrated by a lens is disposed and in which a document platen glass and a first base contact member are disposed on an upper surface; and
a covering part in which a second base contact member is disposed, which comes into contact with the first base contact member to perform base contact through a closing operation of a user and which separates from the first base contact member and releases the base contact through an opening operation of the user.

2. The optical apparatus according to claim 1,
wherein combinations of the first base contact member and the second base contact member in a state of being in contact with each other by the closing operation are respectively disposed near both end portions of the reading section.

3. The optical apparatus according to claim 2,
wherein the combinations are respectively disposed outside both end portions of the reading section.

4. The optical apparatus according to claim 2 or 3,
wherein the combinations are respectively disposed near edge portions of the document platen glass.

5. The optical apparatus according to any one of claims 1 to 4,
wherein the first base contact member and the second base contact member each are constituted of a metal member having a flat contact surface.

6. The optical apparatus according to claim 5,
wherein at least one of the first base contact member or the second base contact member coming into contact with each other is slidable due to a pressing force generated during contact.

7. The optical apparatus according to any one of claims 1 to 6,
wherein the covering part has an automatic document feeding function.

8. The optical apparatus according to claim 7,
wherein the covering part is able to automatically feed a document having a size larger than an A4 size.
